(19) Europäisches Patentamt
European Patent Office
Office européen des brevets

(11) **EP 4 177 312 A1**

(12) **EUROPEAN PATENT APPLICATION**
published in accordance with Art. 153(4) EPC

(43) Date of publication:
**10.05.2023 Bulletin 2023/19**

(21) Application number: **21831902.8**

(22) Date of filing: **21.06.2021**

(51) International Patent Classification (IPC):
*C09C 1/00* (2006.01)     *C09C 1/40* (2006.01)
*C09C 1/64* (2006.01)     *C09C 3/08* (2006.01)
*C09C 3/10* (2006.01)     *C09C 3/12* (2006.01)
*C08L 101/00* (2006.01)

(52) Cooperative Patent Classification (CPC):
**C08L 101/00; C09C 1/00; C09C 1/40; C09C 1/64;
C09C 3/08; C09C 3/10; C09C 3/12**

(86) International application number:
**PCT/JP2021/023442**

(87) International publication number:
**WO 2022/004468 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.07.2020 JP 2020115083
02.07.2020 JP 2020115084**

(71) Applicant: **Toyo Aluminium Kabushiki Kaisha
Osaka-shi, Osaka 541-0056 (JP)**

(72) Inventors:
• **SATO, Masami**
  **Osaka-shi, Osaka 541-0056 (JP)**
• **NAKAO, Takayuki**
  **Osaka-shi, Osaka 541-0056 (JP)**
• **KAWASHIMA, Katsura**
  **Osaka-shi, Osaka 541-0056 (JP)**

(74) Representative: **Bockhorni & Brüntjen
Partnerschaft
Patentanwälte mbB
Agnes-Bernauer-Straße 88
80687 München (DE)**

(54) **COMPOSITE PIGMENT, THERMOPLASTIC RESIN COMPOSITION CONTAINING SAME, AND MOLDED BODY**

(57) A composite pigment containing a substrate particle and a pigment layer arranged on a surface of the substrate particle, wherein the pigment layer contains a pigment, a resin and a metal oxide, and the metal oxide contains at least one selected from the group consisting of a silicon oxide, a polysiloxane, and composites thereof.

FIG.1

EP 4 177 312 A1

**Description**

TECHNICAL FIELD

The present invention relates to a composite pigment, a thermoplastic resin composition containing the same, and a molded body.

BACKGROUND ART

As a method for imparting an appearance that combines luster and high color saturation, a composite pigment is employed in which a surface of a lustered substrate particle is coated with a pigment having a chromatic color.
For example, PTL 1 (WO2014/050893) discloses a composite pigment (colored aluminum pigment) in which a colored pigment is adhered to a surface of a scaly aluminum particle.

CITATION LIST

PATENT LITERATURE

PTL 1: WO2014/050893

SUMMARY OF INVENTION

TECHNICAL PROBLEM

However, due to the insufficient water resistance, use of pigments that are prone to be eluted in aqueous solvents may be inhibited when in use for an waterborne paint, and particularly in the case of a substrate being metal, there is a problem of generation of hydrogen gas due to metal corrosion when an waterborne paint is stored under a heated condition. Moreover, when manufacturing a molded body by using a composition in which the aforementioned composite pigment is kneaded into a thermoplastic resin, the composite pigment and the thermoplastic resin kneaded at an elevated temperature may cause pigment (colored pigment) to peel off from substrate particles and be liberated into the thermoplastic resin, therefore resulting in a problem of reduced saturation and a variation in color tone in a molded body.
Thus, an object of the present invention is to provide a composite pigment that is excellent in water resistance and inhibits the pigment from peeling off from the substrate particles.

SOLUTION TO PROBLEM

[1] A composite pigment containing a substrate particle and a pigment layer arranged on a surface of the substrate particle, wherein

the pigment layer contains pigments, resins and metal oxides, and
the metal oxide contains at least one selected from the group consisting of a silicon oxide, a polysiloxane, and composites thereof.

[2] The composite pigment according to [1], wherein the resin is a radically polymerized resin of at least one selected from a monomer and an oligomer, and at least one selected from the monomer and the oligomer has two or more polymerizable double bonds.
[3] The composite pigment according to [1] or [2], wherein the substrate particle contains at least one selected from the group consisting of aluminum, an aluminum alloy, glass, alumina, and mica.
[4] The composite pigment according to any one of [1] to [3], wherein the pigment layer is porous.
[5] The composite pigment according to [4], wherein the pigment layer has a specific surface area of 10 to 100 $m^2$/g.
[6] A thermoplastic resin composition containing the composite pigment according to any of [1] to [5].
[7] A molded body comprising the thermoplastic resin composition according to [6].

ADVANTAGEOUS EFFECTS OF INVENTION

The composite pigment of the present invention is superior in water resistance than conventional composite pigments to which colored pigments are adhered.

Further, the pigment immobilized on the surface of the substrate particles by a resin, to which heat resistance and mechanical strength are imparted by a metal oxide, enable the pigment from peeling (falling off) from the substrate particles upon kneading at elevated temperatures or the like. Therefore, according to the present invention, it is possible to provide a thermoplastic resin composition containing a composite pigment that inhibits the pigment from peeling off from the substrate particles upon use of the composite pigment in producing a molded body and the like.

As a result, reduction of saturation, a variation in color tone, and the like of a molded body obtained by using the composite pigment can be inhibited.

BRIEF DESCRIPTION OF DRAWINGS

FIG. 1 is a schematic cross-sectional view illustrating the composite pigment of an embodiment.

FIG. 2 is a schematic view illustrating an enlarged cross-section according to an example of the composite pigment of an embodiment.

FIG. 3 (a) is an optical micrograph of a surface of a molded body obtained by using the composite pigment of Example 1. FIG. 3 (b) is an optical micrograph of a surface of a molded body obtained by using the composite pigment of Comparative Example 1.

FIG. 4 (a) is an SEM photograph (reference photograph) illustrating a cross-section of an example of the composite pigment of an embodiment. FIG. 4 (b) is an SEM photograph (comparative reference photograph) illustrating a cross-section of an example of the composite pigment different from the embodiment.

FIG. 5 (a) is a BF-STEM image illustrating a cross-section in the vicinity of the surface of the composite pigment of Example 1. FIG. 5 (b) is a HAADF-STEM image illustrating a cross-section in the vicinity of the surface of the composite pigment of the same Example 1.

FIG. 6 is a partially enlarged image of region (I) in FIG. 5.

FIG. 7 is a partially enlarged image of region (II) in FIG. 6.

FIG. 8 is a partially enlarged image of FIG. 7.

FIG. 9 is a partially enlarged image of region (III) in FIG. 6.

FIG. 10 is a partially enlarged image of FIG. 9.

FIG. 11 (a) is a HAADF-STEM image in almost the same field of view as FIG. 7 (b). FIGs. 11 (b) to (h) are STEM-EDX images in almost the same field of view as FIG. 7. (it is noted in FIGs. 11 to 13 and FIG. 16, (b) to (h) are images illustrating distributions of C, N, O, Al, Si, Cl, and Cu, respectively).

FIG. 12 (a) is the same image as FIG. 8(b). FIGs. 12 (b) to (h) are STEM-EDX images in the same field of view as FIG. 8.

FIG. 13 (a) is the same image as FIG. 10 (b). FIGs. 13 (b) to (h) are STEM-EDX images in the same field of view as FIG. 10.

FIG. 14 is a partially enlarged image of region (IV) in FIG. 6.

FIG. 15 is a partially enlarged image of FIG. 14.

FIG. 16 (a) is the same image as FIG. 15 (b). FIGs. 16 (b) to (h) are STEM-EDX images in the same field of view as FIG. 15.

DESCRIPTION OF EMBODIMENTS

<Composite Pigment>

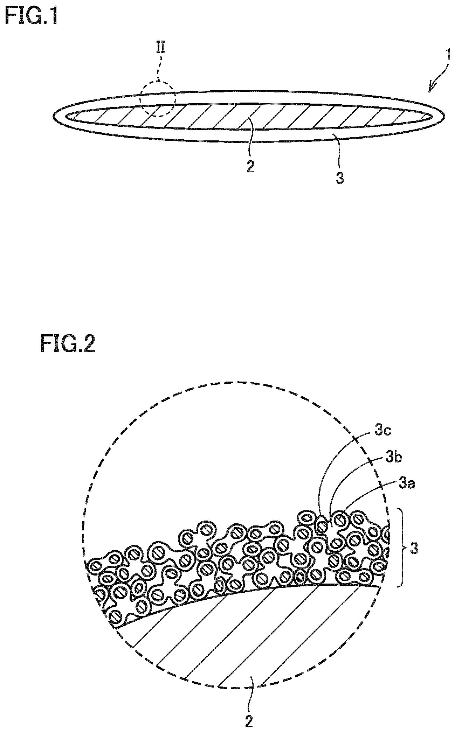

Referring to FIG. 1, the composite pigment of the present embodiment includes a composite pigment 1, a substrate particle 2 and a pigment layer 3 arranged on the surface of substrate particle 2.

Pigment layer 3 contains pigment, resin and metal oxide. It is noted that the metal oxide includes at least one selected from the group consisting of a silicon oxide, polysiloxane, and composites thereof.

More specifically, as shown in FIG. 2, for example, pigment layer 3 is composed of a plurality of particles in which pigment 3a is coated with resin 3b, on the surface of substrate particle 2, and a metal oxide, which is not shown in the figure, is adhered to surface 3c of the plurality of particles.

Namely, in the present embodiment, a composite of the resin and metal oxide is present interposed between the plurality of the pigments, in pigment layer 3 containing the pigment, resin, and metal oxide.

Resin 3b contained in pigment layer 3 has a three-dimensional crosslinked structure and thereby is hardly melted when heated, and furthermore, a metal oxide present in pigment layer 3 (for example, on the surface of resin 3b) together with resin 3b improves water resistance. The mechanical strength is also improved, which therefore has an effect of inhibiting the pigment from peeling (falling off) from the surface of the substrate particle in the case of adding the composite pigment to the resin and kneading them, or in the case of adding the composite pigment to a paint and stirring them.

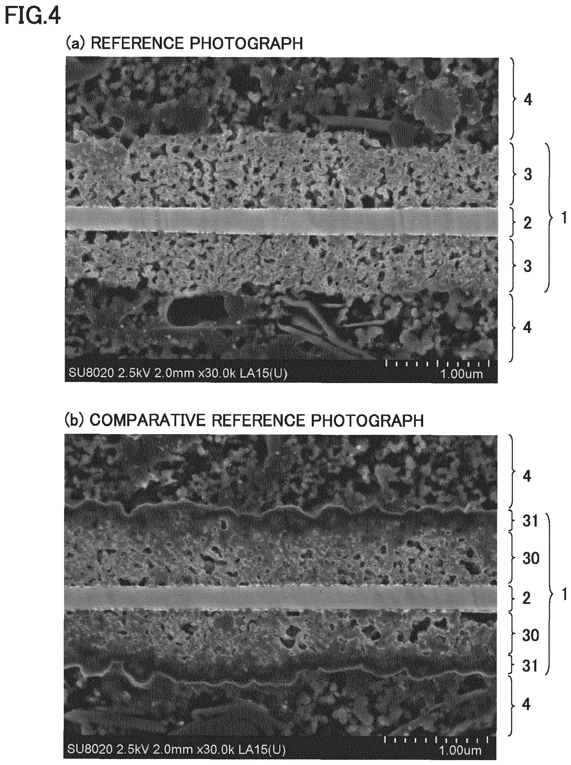

Meanwhile, in composite pigment 1 shown in the comparative reference photograph (SEM (scanning electron microscope) image after osmium staining) in FIG. 4(b), a layer 30 with the single pigment is formed in the vicinity of the surface of substrate particle 2, and a layer 31 composed of the metal oxide and resin is formed on the surface of layer 30. In such an aspect, the resin and metal oxide being outside of the pigment render the single pigment layer 30 brittle. Therefore, in the case of kneading the thermoplastic resin and the composite pigment at elevated temperatures, the pigment peels off from the substrate particle and is liberated into the thermoplastic resin. It is noted that the photograph in FIG. 4 shows composite pigment 1 present in thermoplastic resin 4.

In contrast, as shown in the reference photograph in FIG. 4(a), in composite pigment 1 of the present embodiment, pigment layer 3 composed of the pigment, resin, and metal oxide mixed together on the surface of the substrate particle 2 is formed. This allows the pigment layer itself, to which water resistance was imparted, to be used as an outermost layer, enabling a composite pigment with high water resistance while maintaining saturation to be obtained.

Moreover, upon kneading the thermoplastic resin and the composite pigment at elevated temperatures, the pigment can be inhibited from peeling off from the substrate particles. This enables the reduction in saturation, the variation in color tone, and the like of a molded body obtained by using the composite pigment to be inhibited.

[Substrate particle]

The substrate particle is a particle that serves as a substrate for the composite pigment. The substrate particle preferably has at least luster of the surface thereof.

Examples of the substrate particle with luster include metallic flakes such as aluminum, titanium, copper, brass, and stainless steel, as well as natural mica, synthetic mica, alumina flakes, and glass flakes.

In the case of the substrate particle being aluminum or an aluminum alloy, which facilitates to cause a gas generation problem, the present invention is particularly effective.

As the substrate particle, a particle that has undergone water resistant treatment with a phosphorous compound, molybdenum compound, or the like, or a particle coated with a resin, metal oxide, or the like, may be used.

The shape of the substrate particle is not particularly limited, and is particularly preferably, for example, flaky, scaly, disk-like, or ellipsoidal.

The size of the substrate particle is not particularly limited, and for example, a particle with a D50 of 1 $\mu$m to 200 $\mu$m in volume distribution by a laser diffraction method may be suitably used.

[Pigment layer]

The pigment layer is arranged on the surface of the substrate particles. The pigment (colored pigment) may be adhered directly to the surface of the substrate particles or indirectly to the substrate particles via an adhesive component such as a resin.

The pigment layer contains the pigment, resin and metal oxide.

Referring to FIG. 2, pigment layer 3 is preferably configured of a matrix (three-dimensional crosslinked structure) composed of particles of resin 3b that encompass pigment 3a and a metal oxide adhered to surface 3c of the resin.

(Pigment)

As the pigment, various known pigments exhibiting color tone can be used. The color tone is not particularly limited and may be any of colored (chromatic), white, black, or the like, and may be opaque or translucent, or transparent.

The pigment is not particularly limited, and examples thereof include organic pigments such as diketopyrrolopyrrole-based, quinacridone-based, dioxazine-based, isoindolinone-based, condensed azo-based, threne-based, perinone-based, perylene-based, quinophthalone-based, and phthalocyanine-based, and inorganic pigments such as iron oxide, titanium oxide, and carbon black. The pigments in the present embodiment are different compounds from metal oxides described below.

Specific examples of the organic pigment include phthalocyanine, phthalocyanine halide, quinacridone, diketopyrrolopyrrole, isoindolinone, an azomethine metal complex, indanthrone, perylene, perinone, anthraquinone, dioxazine, benzimidazolone, condensed azo, triphenylmethane, and quinophthalone, anthrapyrimidine, and aniline black.

Specific examples of the inorganic pigment include iron oxide, anthracite, Prussian blue, cobalt blue, chrome green, bismuth vanadate, composite oxide calcined pigments, carbon black, titanium black, titanium oxide, ultrafine particle titanium oxide, and the like.

The amount of pigment layers stacked is preferably adjusted as appropriate according to the specific surface area of the substrate particles. The average thickness of the pigment layer on the surface of the substrate particles is preferably 1 nm to 5 $\mu$m on one side of the pigment layer. In the case of the average thickness of the pigment layer being less than 1 nm, the composite pigment may not be colored to the extent that sufficient design properties are exhibited. Moreover, in the case of the average thickness of the pigment layer exceeding 5 $\mu$m, the pigment layer facilitates peeling off or the hiding power of the composite pigment per unit mass tends to decrease. It is noted that the average thickness of the pigment layer can be measured with an electron microscope by exposing the cross section of the pigment layer with embedded in a resin by ion milling.

Even coloring materials normally classified as dyes can be used as pigments in the present embodiment, as long as they retain their particle state under prescribed conditions.

(Resin)

The resin is not particularly limited and is preferably a radical polymerization product of at least either of a monomer and an oligomer. At least one selected from a monomer and an oligomer preferably has two or more polymerizable double bonds. In this case, it is advantageous in that a three-dimensional crosslinked resin (resin matrix) is efficiently formed and heat resistance is improved.

It is noted that the composition of the resin and the like will be described in detail in "Production method of composite pigment" below.

The amount of the resin is not particularly limited and is preferably an amount to the extent that the pigment layer can be inhibited from peeling off from the substrate particles and is configured of a porous matrix. Specifically, the amount of the resin is preferably 5 to 100% by mass and more preferably 10 to 70% by mass relative to the total amount of the pigment and the binder.

In the pigment layer, a resin forming a porous matrix allows the metal oxide to adhere to the surface including the porous portion thereof, thereby enabling the heat resistance and mechanical strength of the pigment layer to be efficiently improved by the metal oxide. For this reason, the pigment layer is preferably porous. The specific surface area of the pigment layer is preferably 10 to 100 $m^2/g$ and more preferably from 15 to 90 $m^2/g$.

However, the resin singly is not sufficient for water resistance, heat resistance and mechanical strength, and therefore the pigment layer further contains the metal oxide in the composite pigment of the present embodiment.

(Metal oxide)

The metal oxide is present in the pigment layer mixed with the pigment and the resin. The metal oxide having heat resistance and mechanical strength, protects the pigment layer from thermal deformation and mechanical stress of the protective layer even though it is heated and kneaded upon molding, and allows the pigment layer to remain on the surface of the substrate. Namely, the metal oxide inhibits the pigment layer from peeling off from the substrates and being liberated into the thermoplastic resin.

In the present embodiment, the metal oxide includes at least one selected from the group consisting of a silicon oxide, polysiloxane, and composites thereof. The metal oxide is preferably colorless in order not to hinder coloration by the pigment. The silicon oxide, polysiloxane, and composites thereof are excellent in terms of transparency, safety, and production cost.

The metal oxide may contain a component other than the silicon oxide, polysiloxane, and composites thereof, and in this case, the constituent material of the metal oxide is not particularly limited, and oxides or hydroxides of at least one element selected from the group consisting of Al, Si, Ti, Cr, Zr, Mo, and Ce are suitably used. It is noted that the metal oxide may contain hydrated water to the extent that the effect of the present embodiment is not impaired.

Silicon oxide and the composite (condensate) of the silicon oxide and polysiloxane are both oxides of Si. In addition, "polysiloxane" refers to a compound in which an organosilicon compound is condensed with siloxane bonds.

The metal oxide is preferably amorphous. A crystalline metal oxide is hard but brittle, and may crack in applications that undergoes mechanical stress, resulting in a decrease in water resistance and the like.

<Production method of composite pigment>

An aspect of the production method of the composite pigment of the present embodiment will be described below.

The aspect of the production method of the composite pigment of the present embodiment mainly includes the following pigment adhesion step and pigment layer formation step.

(Pigment adhesion step)

The pigment adhesion step is a step of adhering the pigment to the surface of the plural substrate particles. The pigment (colored pigment) may be adhered directly to the surface of the substrate particles or indirectly to the substrate particles via an adhesive component such as a resin.

The method for adhering the pigment to the surface of the substrate particles is not particularly limited, and various known methods can be employed. Specifically, for example, the pigment can be adhered to the surface of the substrate particles by adding a carboxylic acid and/or an amine compound as binders to the substrate particles and the pigment (colored pigment) and kneading them. The binder is preferably a mixture of a carboxylic acid and amine compound. The carboxylic acid preferably has two or more carboxyl groups. The amine compound preferably has two or more amino groups. The amount of such a binder depends on the type of pigment and the particle size thereof, however, it is preferably 50 parts by mass or less and more preferably 40 parts by mass or less relative to 100 parts by mass of the pigment in order to render the pigment layer porous.

The ratio of the amount of the pigment to the total amount of the composite pigment is preferably 10 to 60% by mass and more preferably 15 to 50% by mass. In this case, voids are present between the pigments adhered to the surface of the substrate particles, and the resin and the metal oxide penetrate into the voids, facilitating a pigment layer composed of the pigment, the resin and the metal oxide to be formed.

(Pigment layer formation step)

In the pigment layer formation step, a pigment layer containing the pigment, the resin, and the metal oxide is formed. For example, a pigment layer is formed containing the pigment adhered to the surface of the substrate particles, the metal oxide, and the resin having a three-dimensional crosslinked structure.

The method for forming the pigment layer can suitably employ, for example, the following method.

First, the substrate particles to which the pigment obtained in the coloration step is adhered are dispersed in a hydrocarbon or alcohol-based solvent (preferably a hydrocarbon-based solvent). Next, to the slurry obtained are added a monomer and/or an oligomer and a radical polymerization initiator, and the mixture is heated with stirring to allow radical polymerization to proceed, resulting in depositing a resin on the surface of the substrate particles, to which the pigment was adhered.

Examples of the above radical polymerization initiator include benzoyl peroxide, isobutyl peroxide, azobisisobutyronitrile, azobisisovaleronitrile and the like. The amount of the radical polymerization initiator added is preferably 1 part by mass or more and 50 parts by mass or less relative to 100 parts by mass of the monomer and/or oligomer.

The polymerization reaction is preferably carried out under an oxygen-free atmosphere (for example, inert gas atmosphere such as nitrogen and argon). The temperature of the polymerization reaction is preferably 50 to 150°C, more preferably from 70 to 110°C. In addition, the time of the polymerization reaction is preferably 30 minutes or longer and 30 hours or shorter.

The above monomers and oligomers are not particularly limited, and include, for example, acrylic acid, methacrylic acid, methyl methacrylate, butyl acrylate, 2-ethylhexyl acrylate, lauryl acrylate, stearyl acrylate, cyclohexyl acrylate, 2-hydroxyethyl acrylate, 2-hydroxybutyl acrylate, 2-methoxyethyl acrylate, 2-diethylaminoethyl acrylate, butyl methacrylate, octyl methacrylate, 1,4-butanediol diacrylate, 1,6-hexanediol diacrylate, 1,9-nonanediol diacrylate, neopentyl glycol diacrylate, tripropylene glycol diacrylate, tetraethylene glycol diacrylate, trimethylolpropane triacrylate, trimethylolpropane triamethacrylate, tetramethylolmethane tetraacrylate, pentaerythritol triacrylate, trisacryloxyethyl phosphate, ditrimethylolpropane tetraacrylate, styrene, $\alpha$-methylstyrene, vinyl toluene, divinylbenzene, acrylonitrile, methacrylonitrile, vinyl acetate, vinyl propionate, maleic acid, crotonic acid, itaconic acid, polybutadiene, linseed oil, soybean oil, epoxidized soybean oil, epoxidized polybutadiene, cyclohexene vinyl monoxide, divinyl benzene monoxide, mono(2-acryloyloxyethyl) acid phosphate, mono(2-methacryloyloxyethyl) acid phosphate, 2-acryloyloxyethyl acid phosphate, 2-methacryloyloxyethyl acid phosphate, (2-hydroxyethyl) methacrylate acid phosphate, 2-methacryloyloxyethyl acid phosphate, 2-acryloyloxyethyl acid phosphate, diphenyl-2-methacryloyloxyethyl acid phosphate, diphenyl-2-acryloyloxyethyl acid phosphate, dibutyl-2-methacryloyloxyethyl acid phosphate, dibutyl-2 acryloyloxyethyl acid phosphate, dioctyl-2-methacryloyloxyethyl acid phosphate, dioctyl-2-acryloyloxyethyl acid phosphate, 2-methacryloyloxypropyl acid phosphate, bis(2-chloroethyl) vinyl phosphonate, di-2-methacryloyloxyethyl acid phosphate, tri-2-methacryloyloxyethyl acid phosphate, di-2-acryloyloxyethyl acid phosphate, tri-2-acryloyloxyethyl acid phosphate, diallyl dibutyl phosphonosuccinate, acrylic modified polyester (degree of polymerization: 2 to 20), acrylic modified polyether (degree of polymerization: 2 to 20), acrylic modified urethane (degree of polymerization: 2 to 20), acrylic modified epoxy (degree of polymerization: 2 to 20), and acrylic modified spirane (degree of polymerization: 2 to 20).

At least one selected from a monomer and an oligomer preferably has two or more polymerizable double bonds. In this case, it is advantageous in that a three-dimensional crosslinked resin (resin matrix) is efficiently formed and heat resistance is improved.

Moreover, when using an organosilicon compound having a polymerizable double bond such as vinyltriethoxysilane, acryloxypropyltriethoxysilane, or methacryloxypropyltriethoxysilane as a monomer and/or oligomer, the resin is firmly bonded to the metal oxide described below and heat resistance is improved.

It is noted that the process up to the step of coating by such a resin is the same as the method disclosed in WO2014/050893.

Next, substrate particles coated with the resin matrix or the like that encompasses the pigment are dispersed in a solvent. The solvent is not particularly specified, and any solvent that does not prevent the metal oxide from precipitation by a sol-gel method is acceptable. Examples thereof include alcohol-based, glycol ether-based, and hydrocarbon-based solvents. To the obtained slurry were added a metal compound to be the raw material of the metal oxide and water, and the mixture undergoes hydrolysis by using an acid or base as a catalyst to precipitate a metal oxide. This results in formation of a pigment layer in which the resin containing the pigment and the metal oxide are composited.

As shown in FIG. 2, the metal oxide is, preferably adhered to, for example, surface 3c of the matrix composed of particles of resin 3b including pigment 3a. In order to facilitate obtaining such a state, the compounding amount of the metal compound is preferably 2.0 to 45.0% by mass (as a solid content after TEOS reaction) and more preferably 3.0 to 35.0% by mass (as a solid content after TEOS reaction), relative to the total amount of the pigment and binder.

As a raw material for the metal oxide, known metal compounds that are hydrolysable can be used without particular limitation. Examples of such a metal compound include alkoxides of Al, Si, Ti, Cr, Zr, Mo, and Ce, chlorides, carboxylates, acetylacetonate complexes and the like. Examples of metal compounds include tetraethoxysilane (TEOS).

<Thermoplastic resin composition and molded body>

The thermoplastic resin composition of the present embodiment includes the aforementioned composite pigment and the thermoplastic resin.

The molded body of the present embodiment also includes the aforementioned thermoplastic resin composition.

The thermoplastic resin composition of the present embodiment containing the thermoplastic resin can be formed into a desired shape by melting the thermoplastic resin with heat upon producing a molded body.

The thermoplastic resin is not particularly limited, and at least one resin selected from the group consisting of for example, polyethylene, ABS, polycarbonate, and the like can be used.

The amount of the thermoplastic resin in the thermoplastic resin composition is not particularly limited, and for example, in a case in which the thermoplastic resin composition is used as a master batch (solid additive for plastics), the amount of the composite pigment is preferably 20 parts by mass or more and 200 parts by mass or less relative to 100 parts by mass of the thermoplastic resin. Less than 20 parts by mass of the composite pigment renders the coloring power weak and may be unable to obtain a desired design. Meanwhile, more than 200 parts by mass of the composite pigment renders it difficult to use the thermoplastic resin composition as a master batch. In the case of using the thermoplastic resin composition for production of a molded body by such as injection molding, the composite pigment is preferably 0.01 parts by mass or more and 30 parts by mass or less relative to 100 parts by mass of the thermoplastic resin. Less than 0.01 parts by mass of the composite pigment renders the coloring power weak and may be unable to obtain a desired design. Meanwhile, more than 30 parts by mass of the composite pigment tends to decrease the mechanical strength of the molded body significantly.

The thermoplastic resin composition is not particularly limited as long as it is a composition containing the aforementioned compound pigment and the thermoplastic resin, and also includes, for example, a composition containing powder such as a compound and a masterbatch, or solvents for paints, inks, and cosmetics as the thermoplastic resin composition.

EXAMPLES

The present invention will be described in more detail by way of Examples below, however, the present invention is not limited thereto.

(Example 1)

[Preparation of substrate particle]

A three-necked flask was charged with 600 mL of mineral spirit, thereto was added 286.0 g of an aluminum flake pigment (product name: "CS460", metallic content of 70% by mass, average particle size of 16 μm, manufactured by Toyo Aluminum K.K.) as a substrate, and 40.0 g of a DIACID 1550 (manufactured by Harima Chemicals Group, Inc.), and the mixture was heated and stirred at 100°C, and then cooled to room temperature and filtered for degreasing, as a result of which aluminum flakes treated with degreasing (solid content of 70% by mass), which were to be used as substrate particles, were obtained.

[Pigment adhesion step]

Next, the following materials were fed into a kneader and stirred at 80°C for 1 hour.

Aluminum flakes that underwent degreasing treatment (substrate particles): 200.0 g (as solid content)
Mineral spirit (non-polar solvent): 400 mL
Blue pigment (LIONOL BLUE 7185-PM, manufactured by TOYOCOLOR CO., LTD.): 150.0 g
Aliphatic dicarboxylic acid (DIACID 1550, manufactured by Harima Chemicals, Group, Inc.): 10.0 g
Hindered amine (ADEKASTAB LA-67, manufactured by ADEKA Corporation): 10.0 g.

By using them, a slurry containing aluminum flakes (pigment-coated particles), to the surface of which the pigment and the resin were adhered was thus obtained.

[Pigment layer formation step]

Next, to 1000 mL of mineral spirit in a three-necked flask was added the entire amount of the slurry containing the obtained pigment-coated particles and further added 1.0 g of acrylic acid, and they were stirred. The three-necked flask was further charged with a solution of 40.0 g of trimethylolpropane trimethacrylate, 10.0 g of divinylbenzene, and 5.0 g of azobisisobutyronitrile, respectively, dissolved in 150 mL of mineral spirit, and the mixture was stirred at 100°C for 6 hours while nitrogen was blown in. Thereafter, the slurry was cooled to room temperature and then filtered to obtain particles (resin-coated particles) in which the surface of the substrate particles was coated with the pigment and a resin having a crosslinked structure of trimethylolpropane trimethacrylate and divinylbenzene.

The amount of the resin (trimethylolpropane trimethacrylate and divinylbenzene) used here is 29.4% by mass relative to the total amount of the pigment and binder.

(Metal oxide adhesion: Silica coating)

A slurry of the resin-coated particles obtained (solid content of 100 g and metal content of 47.6 g) dispersed in 1000 mL of isopropyl alcohol (IPA) in a three-necked flask, was prepared and raised to a temperature of 50°C. To the slurry after the temperature rise was added 30 g of water and added an appropriate amount of monoethanolamine to adjust the pH of the slurry to 8.5.

Next, 30 g of tetraethoxysilane (hereinafter referred to as "TEOS") (solid content of 8.4 g after reaction, 16.0% by mass (as solid content) relative to the total amount of the pigment and binder) was gradually added to the slurry as a metal compound (raw material for the metal oxide), and they were further mixed with stirring at 70°C for another 6 hours to allow reaction for depositing TEOS as silica on the surface of the resin matrix of resin-coated particles to proceed. During the reaction, the pH value of the slurry was checked every 2 hours, and an appropriate amount of monoethanolamine was added, so that the pH of the slurry was adjusted to 8.5. After completion of the reaction, the slurry was cooled to room temperature and filtered to obtain a composite pigment with a pigment layer containing the pigment, resin, and silica (metal oxide) on the surface (see FIG. 2).

(Example 2)

A composite pigment was obtained in the same manner as in Example 1 except that the amount of TEOS was changed to 7 g (3.7% by mass relative to the total amount of the pigment and binder) in the metal oxide adhesion step.

(Example 3)

A composite pigment was obtained in the same manner as in Example 1 except that the amount of TEOS was changed to 15 g (8.0% by mass relative to the total amount of the pigment and binder) in the metal oxide adhesion step.

(Comparative Example 1)

The composite pigment of Comparative Example 1 in which a layer composed only of the pigment and resin was formed on the surface of the substrate particles, was obtained in the same manner as in Example 1 except that the metal oxide adhesion step was omitted.

(Comparative Example 2)

In the resin coating step, resin materials to be used were changed to 1.0 g of acrylic acid, 120.0 g of trimethylolpropane trimethacrylate, 30 g of divinylbenzene, and 5.0 g of azobisisobutyronitrile. The composite pigment of Comparative Example 2 was obtained in the same manner as in Example 1 except therefor.

In the composite pigment of Comparative Example 2 obtained, a layer composed of a composite of the pigment, resin, and metal oxide was not formed, and a layer composed of the resin pigment and resin and a layer of the metal oxide were separately present. This is conjectured because trimethylolpropane trimethacrylate (monomer having a polymerizable double bond) being too much did not form a porous resin matrix, and the metal oxide could not penetrate into the resin matrix.

(Comparative Example 3)

In the resin coating step in Example 1, to the slurry before nitrogen was blown in, was added 8.4 g of hydrophobic fumed silica (AEROSIL(R) R972, manufactured by NIPPON AEROSIL CO., LTD.) (equivalent to solid content of TEOS 30 g) and reaction started.

However, the reaction was stopped because the slurry thickened during the reaction. The thickening of the slurry was conjectured because the number of particles in the system was significantly increased due to the liberated fumed silica, accompanied by structural viscosity.

<Test Example 1>

Each composite pigment in an amount of 10 g in terms of solid content was weighed into a PP (polypropylene) cup, and 20 g of thinner (product name: Nax Admira 500, standard thinner, manufactured by Nippon Paint Co., Ltd.) was weighed thereto, and the mixture was stirred well with a spatula. To the mixture was added 110 g of CLEAR (product name: Nax Admira 280, clear for correction, manufactured by Nippon Paint Co., Ltd.,), and the mixture was stirred with a stirrer at 500 rpm for 5 minutes. Thereto were added 110 g of the aforementioned thinner and 10 g of a Nax Multi (10:1) #20 hardener and the mixture was stirred well to prepare a test paint.

Next, one side of a surface of a steel sheet that has been subjected to intermediate coating [a steel sheet having a substrate (iron), electrodeposition layer (zinc treated layer), intermediate coat (chipping resistant) layer, base coat layer (for hiding an undercoating layer and for decoration) and top coat layer (protective layer for the base coat) in this order], was coated with the aforementioned test paint by using a spray gun (product name: W-101-134G, manufactured by ANESTO IWATA Corporation) so that a dry film thickness was 13 to 15 $\mu$m, and the coated film was dried at 80°C for 20 minutes.

The surface of the steel sheet coated with the test paint after the drying was measured by using a multi-angle spectrophotometer (MA68 manufactured by X-Rite K. K.) for a FI (flip-flop index) value and C* value (saturation). The measurement results are shown in Table 1.

It is noted that the c* value that is an index of saturation, was calculated from the measured values of the chromaticities (a∗ and b∗ values) at a colorimetric angle of 15° by using the following formula (1):

$$c* = (a*^2 + b*^2)^{1/2} \ .... \ (1)$$

Moreover, the FI values were also calculated from the measured values of L∗15°, L∗45° and L∗110° that were L∗ values (brightness) at measurement angles of 15°, 45° and 110° according to the following formula (2). Since the greater the difference in shadow between a front view and a tilted view, the greater the metallic feeling visually perceived, the FI value is considered to have a correlation with the visual metallic feeling.

[Formula 1]

$$FI = 2.69 \times \frac{(L*15° - L*110°)^{1.11}}{L*45°^{\ 0.86}} \qquad (2)$$

<Test Example 2>

Each of the samples prepared in the above Examples and Comparative Examples in an amount of 25 g in terms of solid content was weighed, and 90 g of butyl cellosolve was added to prepare a slurry. To the slurry was added 90 g of water and an appropriate amount of 10% dimethylaminoethanol aqueous solution to adjust the pH to 10.5.

200 g of the slurry was weighed and left to stand in a gas generating tester maintained at 40°C for 96 hours. At this time, the amount of hydrogen gas generated was measured. The measurement results are shown in Table 1.

[Table 1]

|  | FI | C* | Amount of gas generated (mL/200g) |
|---|---|---|---|
| Example 1 | 14.4 | 81.3 | 0 |
| Example 2 | 14.8 | 81.9 | 4 |
| Example 3 | 14.6 | 81.5 | 1 |
| Comparative Example 1 | 12.4 | 77.7 | > 40 |
| Comparative Example 2 | 10.5 | 52.0 | 1 |
| Comparative Example 3 | Unevaluable | | Unevaluable |

The results of the amount of gas generated shown in Table 1 found that the composite pigments of Examples 1 to 3 significantly generated less gas than that of Comparative Example 1. This is conjectured because in each of Examples 1 to 3, the pigment layer is inhibited from peeling off from the substrate surface, and the gas generated due to the deterioration reaction of the substrate particles was inhibited. Contrarily, in the composite pigment of Comparative Example 1, it is conjectured that the pigment layer peeled off from the substrate surface, and hydrogen gas was generated by the deterioration reaction of the substrate particles.

The FI and C∗ results shown in Table 1 also indicate that the composite pigments of Examples 1 to 3 (dried products of the paints prepared by using the composite pigments of Examples) have higher FI and C∗ values and are superior in color tone than the composite pigment of Comparative Example 2. This is conjectured because the pigment layers of Examples 1 to 3 are composite layers of a resin in which a monomer and oligomer containing one or more monomers or oligomers having two or more polymerizable double bonds were polymerized, and the metal oxide, thereby inhibiting the reduction of saturation and the variation in color tone of the dried product (molded body) of the paint. In contrast, the resin material of Comparative Example 2 is conjectured to have the respective resin and silica layers, thereby facilitating peeling off of the pigment layer, and reducing the saturation and the like of the dried product (molded body) of the paint.

<Test Example 3>

One part by weight of the composite pigment of each Example and Comparative Example was compounded with 100 parts by weight of a transparent ABS resin (product name: CL-430, manufactured by Denka Company Limited), and the mixture was kneaded at 230°C to obtain a thermoplastic resin composition. The obtained resin composition underwent injection molding by an injection molding machine "FE80S12ASE" (manufactured by NISSEI PLASTIC INDUSTRIAL CO., LTD.) with a cylinder temperature of 230°C at the front, 225°C at the middle, and 220°C at the rear, mold temperature of 60°C, and plate type mold (50 mm × 80 mm × 3 mm) to obtain a molded body. The obtained molded body was measured by using a multi-angle spectrophotometer (MA68 manufactured by X-Rite K. K.) for FI (flip-flop index) values and C∗ (color saturation) values.

[Table 2]

|  | FI | C* |
|---|---|---|
| Example 1 | 8 | 85.5 |
| Example 2 | 8.4 | 87.5 |
| Example 3 | 8.3 | 86.8 |
| Comparative Example 1 | 8.4 | 78.3 |
| Comparative Example 2 | 6.5 | 47.2 |
| Comparative Example 3 | Unevaluable | |

The FI and C∗ results shown in Table 2 found that the composite pigments of Examples 1 to 3 (dried products of the paints prepared with the composite pigments of Examples) have higher FI and C* values and are superior in color tone than the composite pigment of Comparative Example 2. This is because the resin materials of Examples 1 to 3 are radical polymerization products, and at least one of the monomers and oligomers has two or more polymerizable double bonds, thereby inhibiting the reduction in saturation and the variation in color tone of the dried products (molded bodies) of the paint. In contrast, the resin material of Comparative Example 2 is conjectured to have too much amount of the monomer having a polymerizable double bond, as a result of which a layer in which the resin and metal oxide were separated was obtained to facilitate peeling off of the pigment layer, thereby reducing the saturation and the like of the molded body.

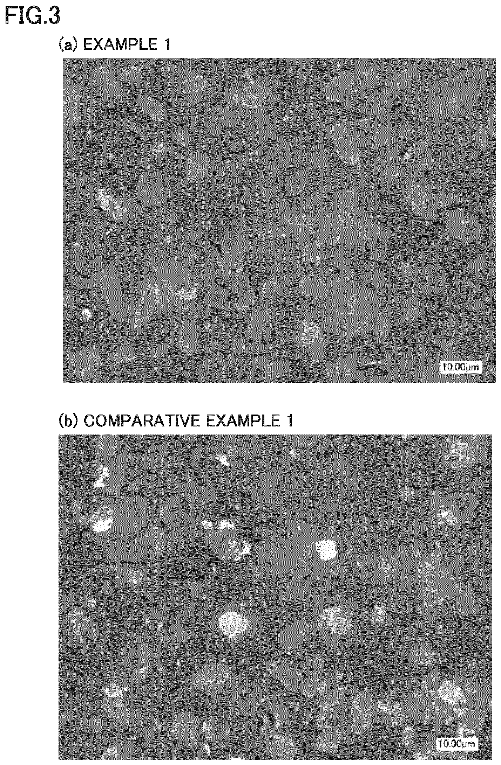

FIG. 3(a) is a photograph of the surface of the molded body obtained by using the composite pigment of Example 1, photographed with an optical microscope ("Digital Microscope VHX-6000," manufactured by KEYENCE CORPORATION) at a magnification of 1000×. In addition, FIG. 3(b) is a photograph of the surface of the molded body obtained by using the composite pigment of Comparative Example 1, photographed in the similar manner. In FIG. 3(b), the white portion is a portion where the pigment layer peeled off from the surface of the composite pigment. The photographs shown in FIGs. 3(a) and 3(b) also demonstrated that the composite pigment of Example 1 in which the silica (metal oxide) is contained in the pigment layer (between the pigments), inhibits the pigment from peeling off from the surface of the substrate particles (aluminum flakes) rather than the composite pigment of Comparative Example 1 in which no metal oxide is contained in the pigment layer.

<TEM image>

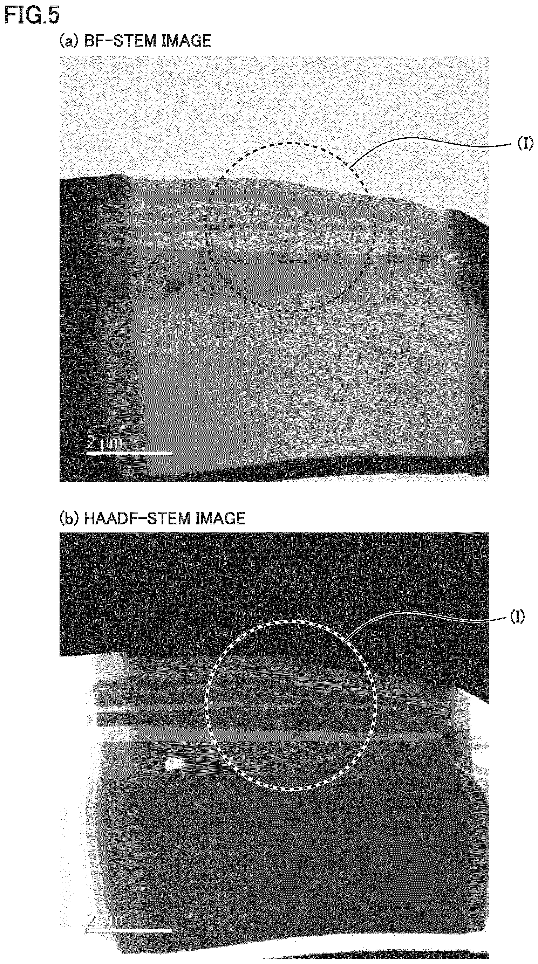

The TEM (transmission electron microscope) images of Example 1 are shown in FIGs. 5 to 10, FIG. 14 and FIG. 15. In each figure, (a) is a BF-STEM image and (b) is a HAADF STEM image.

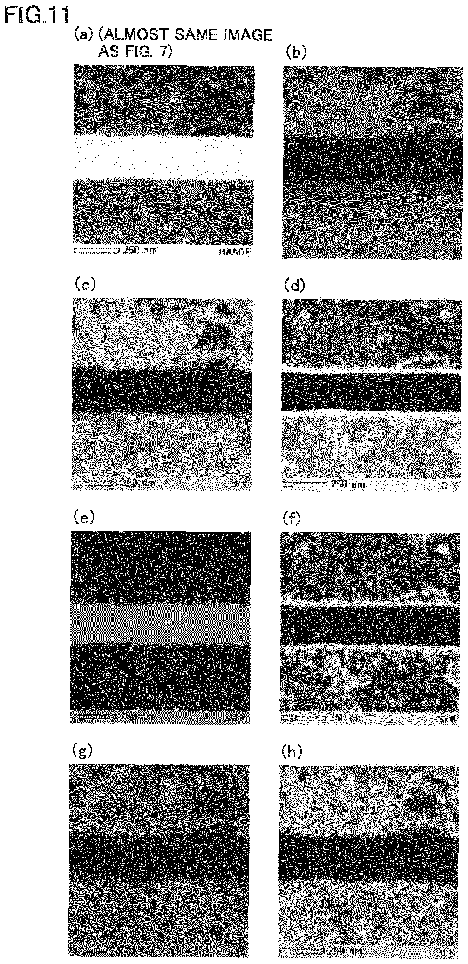

Moreover, the STEM-EDX (scanning transmission electron microscope-energy dispersive X-ray spectroscopy) images photographed for Example 1 are also shown in FIGs. 11 to FIG. 13 and FIG. 16.

It is noted that FIG. 5 (a) is a BF-STEM (bright field scanning transmission electron microscope) image of the cross section in the vicinity of the surface of the composite pigment of Examples, (b) is a HAADF-STEM (high-angle annular dark filed scanning transmission electron microscope) image of the cross section in the vicinity of the surface of the composite pigment of the same Examples. It is noted that the FIB-STEM (focused ion beam processing-scanning transmission electron microscope) images (BF-STEM and HAADF-STEM) were photographed at an acceleration voltage of 200 kV.

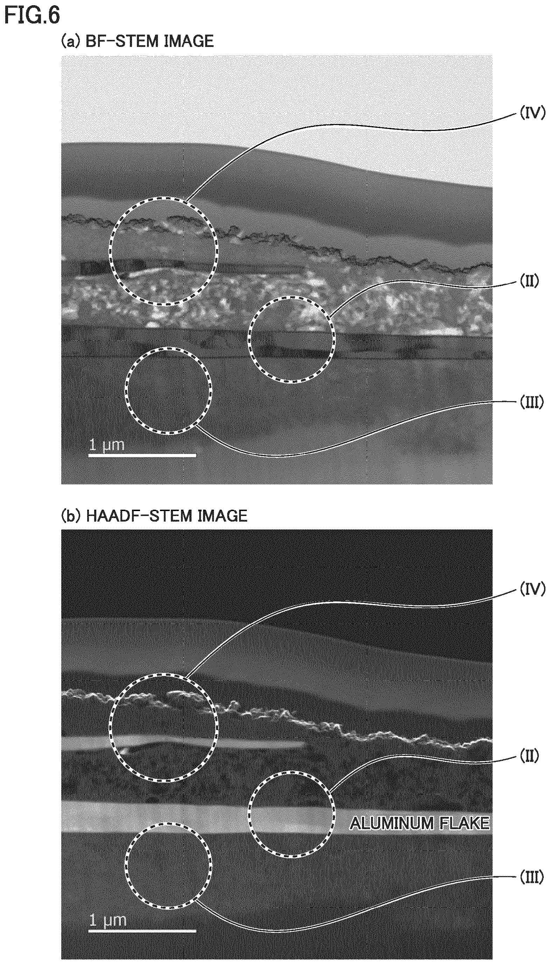

FIG. 6 is a partially enlarged image of region (I) in FIG. 5. In FIG. 6, the portion marked "aluminum flake" is the aluminum flake (substrate particle).

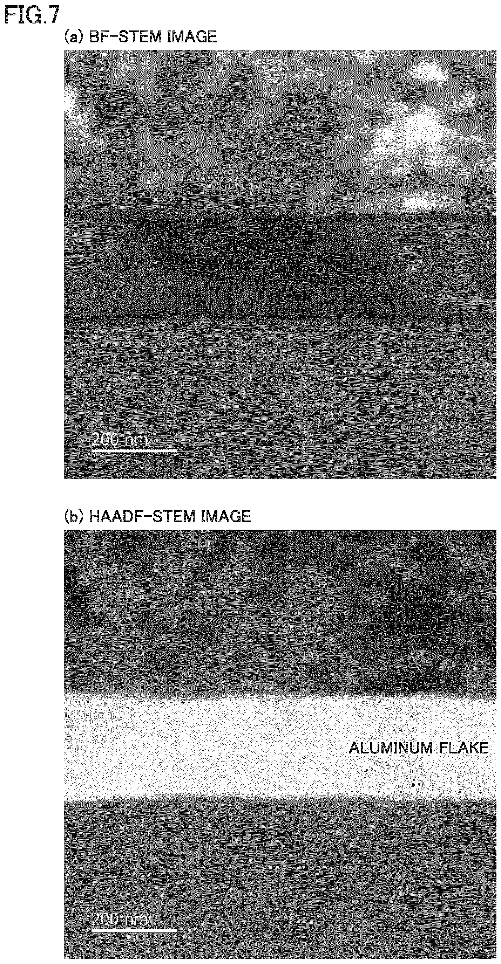

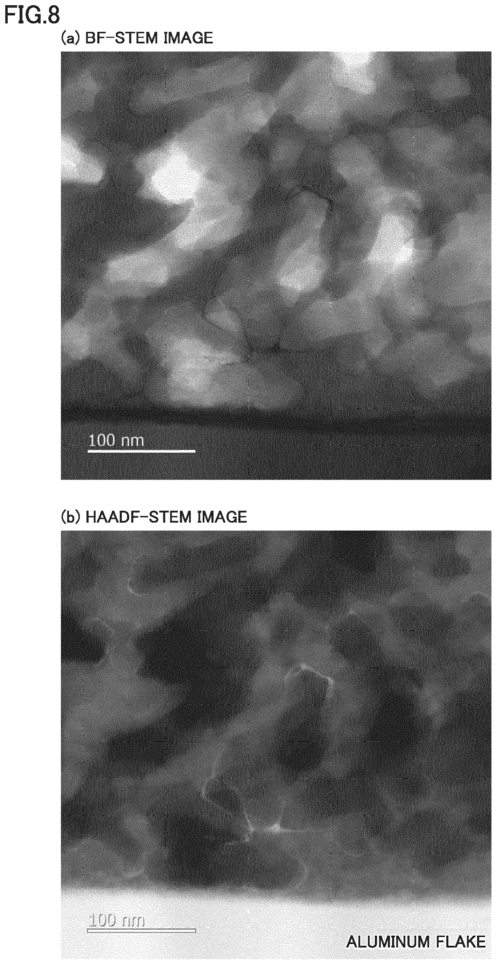

FIG. 7 is a partially enlarged image of region (II) in FIG. 6. FIG. 8 is a partially enlarged image of FIG. 7.

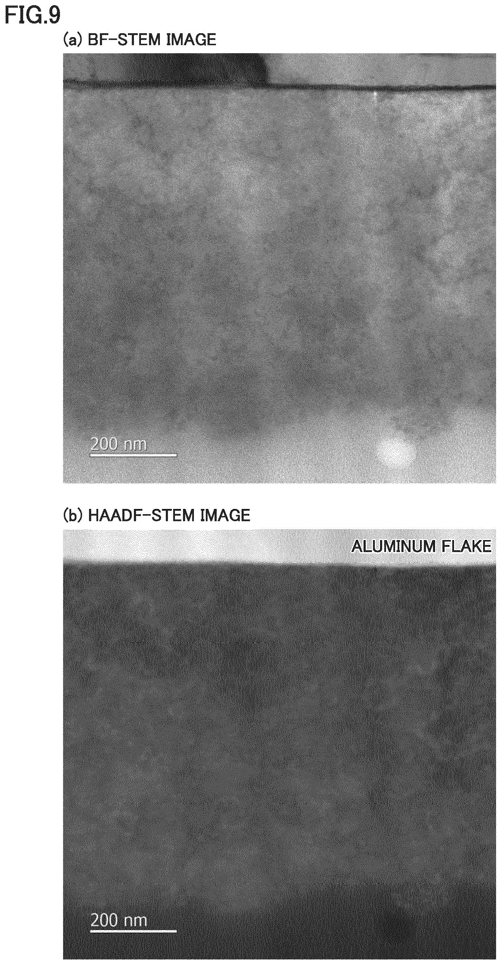

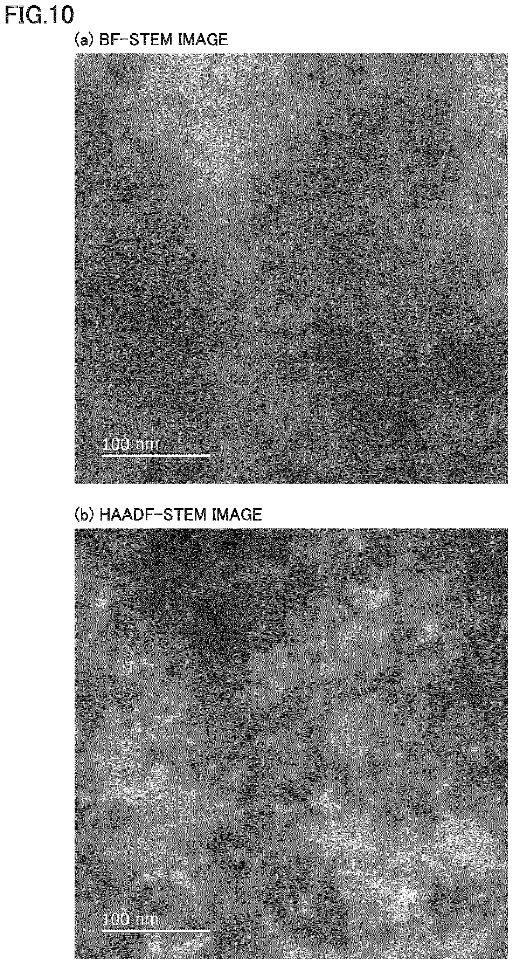

FIG. 9 is a partially enlarged image of region (III) in FIG. 6. FIG. 10 is a partially enlarged image of FIG. 9.

FIG. 11 (a) is a HAADF-STEM image in almost the same field of view as FIG. 7 (b). FIGs. 11 (b) to (h) are STEM-EDX images in almost the same field of view as FIG. 7. In FIGs. 11 to 13 and FIG. 16, (b) to (h) are images indicating the distributions of C, N, O, Al, Si, Cl, and Cu, and the white portion in the figures is the region where each element is present.

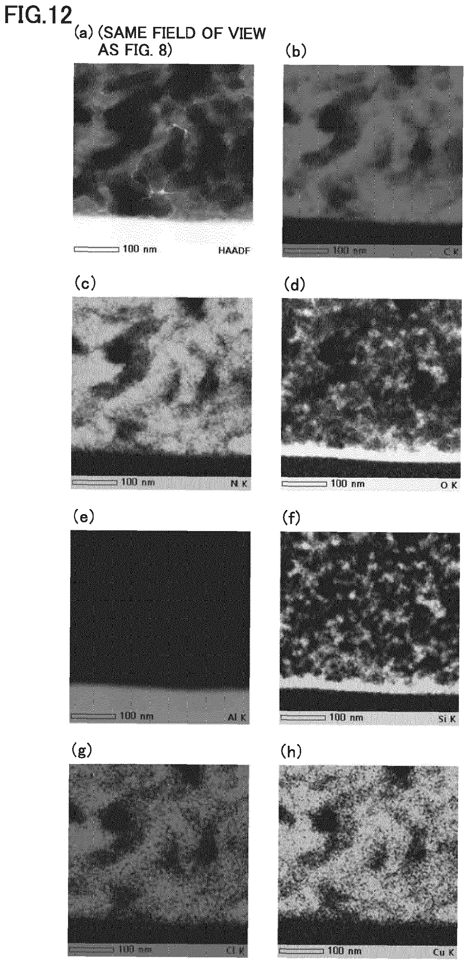

FIG. 12 (a) is the same image as FIG. 8 (b). FIGs. 12 (b) to (h) are STEM-EDX images in the same field of view as FIG. 8.

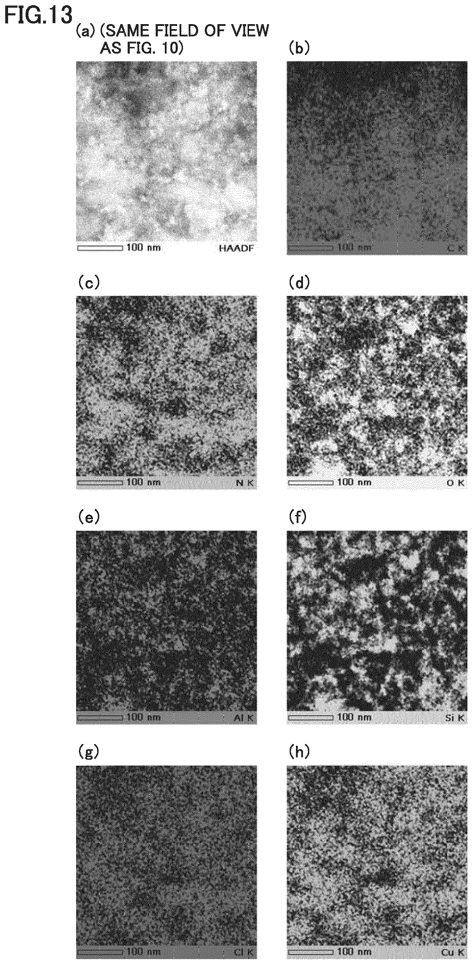

FIG. 13 (a) is the same image as FIG. 10 (b). FIGs. 13 (b) to (h) are STEM-EDX images in the same field of view as FIG. 10.

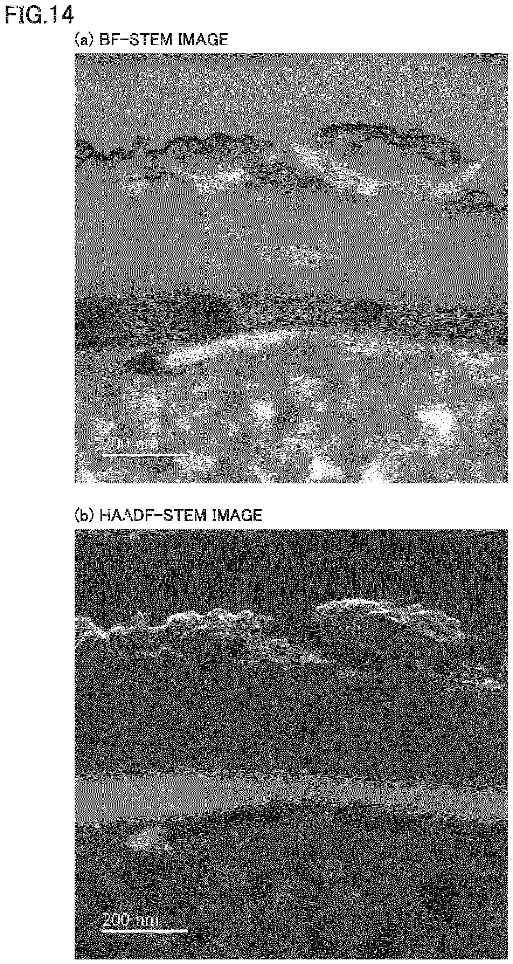

FIG. 14 is a partially enlarged image of region (IV) in FIG. 6.

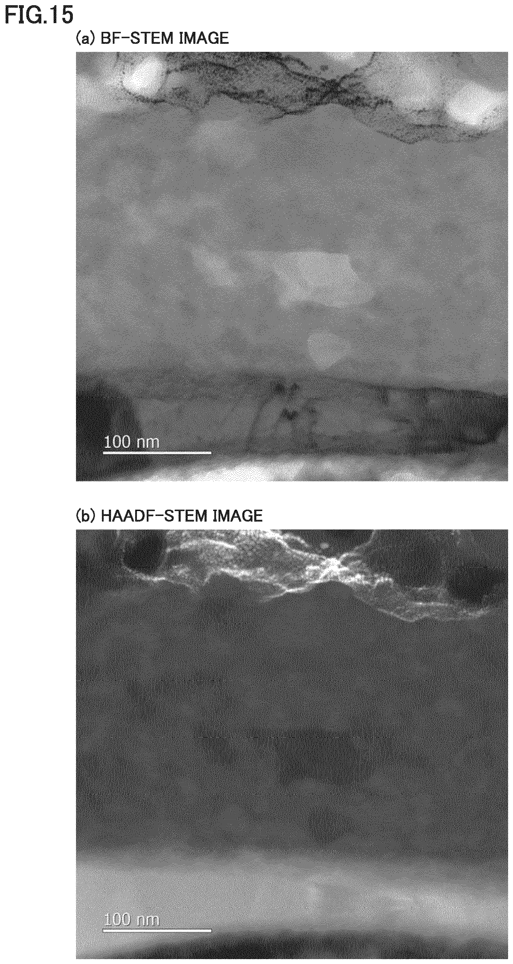

FIG. 15 is a partially enlarged image of FIG. 14.

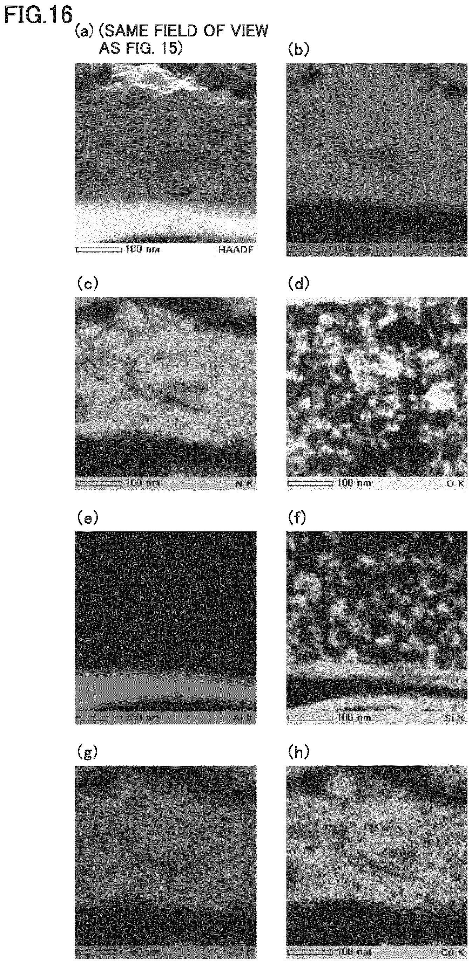

FIG. 16 (a) is the same image as FIG. 15 (b). FIGs. 16 (b) to (h) are STEM-EDX images in the same field of view as FIG. 15.

FIGs. 5 to 16 (in particular, FIGs. 11 to 13 and FIG. 16, which show the distributions of Si element and Cu and Cl elements) indicate that the silica (metal oxide) is uniformly dispersed in the pigment layer adjacent to the substrate particles (aluminum flakes) in the composite pigments of Examples.

<Specific surface area: SSA>

The results of the specific surface area (SSA) measured of each of the composite pigments of Example 1 and Comparative Example 1 are shown in Table 3.

For reference, Table 3 also shows the measurement results of SSA of aluminum pigment (CS460) before pigment adhesion. Here, the specific surface area (SSA) was measured by using a Macsorb(R) HM model-1200 (manufactured by MOUNTEC Co., Ltd.).

[Table 3]

| Aluminum type | Specific surface area ($m^2/g$) |
| --- | --- |
| CS460 | 3 |
| Comparative Example 1 | 25 |
| Example 1 | 70 |

The results shown in Table 3 indicate that the composite pigment of Example 1 has a larger specific surface area than that of Comparative Example 1 and that the porous resin matrix is formed. The reason why the specific surface area of Comparative Example 1 is smaller than that of Example 1 is conjectured to be due to the absence of amorphous silica contained in the pigment layer.

The embodiments and Examples disclosed herein ought to be considered exemplary and not limitative in all respects. The scope of the invention is indicated by the claims, not by the aforementioned description, and is intended to include all modifications within the meaning and scope equivalent to the claims.

REFERENCE SIGNS LIST

1 composite pigment, 2 substrate particle, 3 pigment layer, 3a pigment, 3b resin, 3c surface (metal oxide).

**Claims**

1. A composite pigment containing a substrate particle and a pigment layer arranged on a surface of the substrate particle, wherein

   the pigment layer contains pigments, resins and metal oxides, and
   the metal oxide contains at least one selected from the group consisting of a silicon oxide, a polysiloxane, and composites thereof.

2. The composite pigment according to claim 1, wherein the resin is a radically polymerized resin of at least one selected from a monomer and an oligomer, and at least one selected from the monomer and the oligomer has two or more polymerizable double bonds.

3. The composite pigment according to claim 1 or 2, wherein the substrate particle comprises at least one selected from the group consisting of aluminum, an aluminum alloy, glass, alumina, and mica.

4. The composite pigment according to any one of claims 1 to 3, wherein the pigment layer is porous.

5. The composite pigment according to claim 4, wherein the pigment layer has a specific surface area of 10 to 100 $m^2/g$.

6. A thermoplastic resin composition comprising the composite pigment according to any of claims 1 to 5.

7. A molded body comprising the thermoplastic resin composition according to claim 6.

FIG.1

FIG.2

## FIG.3

(a) EXAMPLE 1

(b) COMPARATIVE EXAMPLE 1

# FIG.4

## (a) REFERENCE PHOTOGRAPH

SU8020 2.5kV 2.0mm x30.0k LA15(U)　　1.00um

## (b) COMPARATIVE REFERENCE PHOTOGRAPH

SU8020 2.5kV 2.0mm x30.0k LA15(U)　　1.00um

# FIG.5

(a) BF-STEM IMAGE

(b) HAADF-STEM IMAGE

FIG.6

(a) BF-STEM IMAGE

(b) HAADF-STEM IMAGE

## FIG.7

(a) BF-STEM IMAGE

200 nm

(b) HAADF-STEM IMAGE

ALUMINUM FLAKE

200 nm

(a) BF-STEM IMAGE

# FIG.8

(a) BF-STEM IMAGE

(b) HAADF-STEM IMAGE

# FIG.9

(a) BF-STEM IMAGE

(b) HAADF-STEM IMAGE

# FIG.10

(a) BF-STEM IMAGE

100 nm

(b) HAADF-STEM IMAGE

100 nm

# FIG.11

(a) (ALMOST SAME IMAGE AS FIG. 7)

(b)

(c)

(d)

(e)

(f)

(g)

(h)

FIG.12
(a) (SAME FIELD OF VIEW
AS FIG. 8)
(b)

(c)
(d)

(e)
(f)

(g)
(h)

FIG.13

(a) (SAME FIELD OF VIEW
AS FIG. 10)

(b)

(c)

(d)

(e)

(f)

(g)

(h)

## FIG.14

(a) BF-STEM IMAGE

200 nm

(b) HAADF-STEM IMAGE

200 nm

# FIG.15

(a) BF-STEM IMAGE

100 nm

(b) HAADF-STEM IMAGE

100 nm

FIG.16

(a) (SAME FIELD OF VIEW AS FIG. 15)

(b)

(c)

(d)

(e)

(f)

(g)

(h)

## INTERNATIONAL SEARCH REPORT

| | International application No. |
|---|---|
| | PCT/JP2021/023442 |

**A. CLASSIFICATION OF SUBJECT MATTER**
Int. Cl. C09C1/00(2006.01)i, C09C1/40(2006.01)i, C09C1/64(2006.01)i, C09C3/08(2006.01)i, C09C3/10(2006.01)i, C09C3/12(2006.01)i, C08L101/00(2006.01)i
FI: C09C3/10, C09C3/12, C09C1/64, C09C1/40, C09C1/00, C09C3/08, C08L101/00

According to International Patent Classification (IPC) or to both national classification and IPC

**B. FIELDS SEARCHED**

Minimum documentation searched (classification system followed by classification symbols)
Int. Cl. C09C1/00, C09C1/40, C09C1/64, C09C3/08, C09C3/10, C09C3/12, C08L101/00

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2014/050893 A1 (TOYO ALUMINIUM KABUSHIKI KAISHA) 03 April 2014 (2014-04-03), claims, paragraphs [0055], [0056], [0073], [0103]-[0105], examples | 1-7 |
| A | WO 2014/041692 A1 (TOYO ALUMINIUM KABUSHIKI KAISHA) 20 March 2014 (2014-03-20), claims, examples | 1-7 |

☐ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02.08.2021 | 10.08.2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT
Information on patent family members

International application No.

PCT/JP2021/023442

| Patent Documents referred to in the Report | Publication Date | Patent Family | Publication Date |
|---|---|---|---|
| WO 2014/050893 A1 | 03.04.2014 | US 2015/0252153 A1 claims, paragraphs [0065], [0066], [0082], [0114]-[0116], examples US 2018/0186945 A1 EP 2902450 A1 CN 104685006 A KR 10-2015-0060891 A ES 2671638 T | |
| WO 2014/041692 A1 | 20.03.2014 | US 2015/0071973 A1 claims, examples EP 2801591 A1 KR 10-2015-0058096 A CN 104781347 A | |

Form PCT/ISA/210 (patent family annex) (January 2015)

**REFERENCES CITED IN THE DESCRIPTION**

**Patent documents cited in the description**

- WO 2014050893 A